Europäisches Patentamt

European Patent Office

Office européen des brevets

(11) Veröffentlichungsnummer: **0 276 799**
**A2**

(12) # EUROPÄISCHE PATENTANMELDUNG

(21) Anmeldenummer: 88101040.9

(22) Anmeldetag: 25.01.88

(51) Int. Cl.⁴: **G06K 19/06**

(30) Priorität: 28.01.87 DE 3702511

(43) Veröffentlichungstag der Anmeldung:
03.08.88 Patentblatt 88/31

(84) Benannte Vertragsstaaten:
**BE CH DE ES FR GB LI NL SE**

(71) Anmelder: **Siemens Aktiengesellschaft Berlin und München
Wittelsbacherplatz 2
D-8000 München 2(DE)**

(72) Erfinder: **Krivachy, Thomas, Dr. phil.
Buchauerstrasse 39
D-8000 München 71(DE)**

(54) **Chipkarte als Datenträger.**

(57) Die Erfindung betrifft eine Chipkarte mit Speicherbereichen für unterschiedliche Daten. Sie soll als Wählhilfe an hierfür ausgerüsteten Fernsprechstationen und als Legitimationsmittel (Ausweis) dienen. Dies wird dadurch erreicht, daß lösch-und überschreibbare Speichereinheiten und unveränderbare Speichereinheiten vorgesehen sind, die über unterschiedliche Leseeinheiten ausgelesen und unterschiedlich ausgewertet werden.

EP 0 276 799 A2

## Chipkarte als Datenträger

Die Erfindung betrifft eine Chipkarte als Datenträger, wobei die unterschiedlichen eingespeicherten Daten bestimmten Speicherbereichen zugeordnet sind und durch eine Leseeinrichtung ausgelesen werden.

Personen, die häufig zu gleichen Fernsprechteilnehmern eine Verbindung herstellen, haben an ihrem Arbeitsplatz unterschiedlichste Möglichkeiten Wahlhilfen einzusetzen. Beispielsweise ist es bekannt, ein elektronisches Telefon-und Notizbuch als Telefonzusatzeinrichtung zu benützen ( P 35 14 258.8). Dort können vom Teilnehmer Telefonnummern und zusätzliche Notizen nach unterschiedlichen Suchkriterien eingespeichert werden. Weiterhin ist bekannt, Registerkarten mit eingespeicherten Daten zu verwenden, um beispielsweise auch Teilnehmerdienste ausführen zu lassen. Dies ist jedoch nur bei multifunktionalen Endgeräten bekannt, die mit Bildschirm und alphanumerischer Tastatur ausgerüstet sind (Bitel).

Weiterhin ist es allgemein bekannt, Personalausweise in Form von Chipkarten zu verwenden, die beim Einschieben in eine Leseeinheit eine Anwesenheitskontrolle darstellen, wie es beispielsweise bei Stempelkarten üblich ist. Dabei werden die Zeitnahmen elektronisch abgespeichert und ausgewertet.

Die Aufgabe der Erfindung soll darin bestehen, für einen von unterschiedlichen Standorten aus mit einem im wesentlichen festen Teilnehmerkreis telefonierenden Personenkreis ein leicht mitzuführendes Fernsprechverzeichnis als Wählhilfe zu erstellen, wobei dieses Fernsprechverzeichnis gleichzeitig als elektronisch überprüfbarer Berechtigungs-und Anwesenheitsnachweis dienen soll.

Die Aufgabe wird erfindungsgemäß dadurch gelöst, daß ein erster Teil der Speicherbereiche aus Speicherplätzen besteht, in die mittels einer Einschreibvorrichtung Daten eingespeichert bzw. in denen mittels der Einschreibvorrichtung Daten überschrieben oder gelöscht werden können, daß ein zweiter Teil der Speicherbereiche aus nicht löschbaren und nicht überschreibbaren Speicherplätzen mit fest eingespeicherten Daten besteht, daß die Leseeinrichtung für den ersten Teil der Speicherbereiche einer Fernsprechstation mit zumindest einzeiligem Display zugeordnet ist und daß die Leseeinrichtung für den zweiten Teil der Speicherbereiche einer Kontroll-und Registriereinrichtung zugeordnet ist.

Hieraus ergibt sich der Vorteil, daß die die Chipkarte besitzenden Personen an allen hierfür ausgerüsteten Fernsprechstationen ihr "individuelles Telefonverzeichnis" befragen können, wobei der besondere Vorteil darin zu sehen ist, daß sie dieses Telefonverzeichnis stets als Ausweis mit sich führen.

Die Erfindung wird nachstehend näher erläutert. Dabei wird zunächst auf die hierzu notwendige Fernsprechstation und das Auslesen der "Telefonadressen" aus der Chipkarte eingegangen, wobei die Chipkarte als elektronische Wählhilfe zu betrachten ist.

Als Fernsprechstation ist ein Gerät mit einem einzeiligen oder mehrzeiligen Display und einer Wähltastatur vorgesehen. Außerdem sind eine Sondertaste "Wä" und eine Sondertaste "We" vorgesehen. An der Fernsprechstation ist weiterhin eine Schnittstelle angeordnet, die die Verbindung zu einer mit einer Leseeinrichtung versehenen Aufnahmeeinrichtung für die Wählhilfe führt.

Im Ruhezustand der Fernsprechstation ist der Handapparat aufgelegt. Wird die elektronische Wählhilfe in die Aufnahmeeinrichtung (mechanische Steckvorrichtung) bis zum Anschlag eingeschoben, dann wird über eine entsprechende Anschlagüberwachung die zentrale Steuerung der Fernsprechstation aktiviert, um zunächst eine Prüfroutine ablaufen zu lassen. Es wird z.B. geprüft, ob die Wählhilfe kompatibel und funktionsfähig ist und es wird beispielsweise die Berechtigung des Besitzers überprüft. Ist die Prüfroutine positiv verlaufen, dann erscheint auf dem Display z.B. "wählen".

Durch Betätigen einer Taste (z.B. "1") der mehrfach belegbaren Wähltastatur wird der erste für diese Taste ("1") vorgesehene Speicherbereich (z.B. für die Telefonadressen mit dem Anfangsbuchstaben A) angesteuert und gleichzeitig auch die erste Eintragung unter diesem Buchstaben auf dem Display angezeigt. Wird die Taste "We" betätigt, dann erscheint die nächste Eintragung unter diesem Buchstaben. Dies ist fortsetzbar, bis alle unter diesem Buchstaben (A) vorgenommen Eintragungen aufgezeigt wurden. Danach erfolgt eine Leerstelle und das Aufzeigen der Eintragungen beginnt von vorne. Ist das Display zweizeilig, dann kann jeweils die erste und die zweite Eintragung bzw. die zweite und die dritte Eintragung usw. aufgezeigt werden.

Wird die gleiche Taste ("1") ein zweites oder ein drittes Mal gedrückt, dann wird die erste Eintragung unter dem nächsten Buchstaben (B) oder dem übernächsten Buchstaben (C) aufgezeigt. Für den danach folgenden Buchstaben (D) muß dann einmal die nächste Taste ("2") betätigt werden usw. Ist die gewünschte Telefonadresse auf dem Display angezeigt (bei zweizeiligem Display in der ersten Zeile), dann kann die Verbindungsherstellung entweder durch Betätigen der Taste "Wä" oder durch Abheben des Handapparates erfolgen.

Zum Vornehmen der Eintragungen in die Wählhilfe sind einige der Fernsprechstationen mit einer alphanumerischen Tastatur auszurüsten. Außer den Speicherbereichen für die alphanumerisch geordneten Telefonadressen -dem ersten Teil der Speicherbereiche-ist auf der Chipkarte ein zweiter Teil von Speicherbereichen vorgesehen. Dieser zweite Teil ist im Gegensatz zum ersten Teil nicht überschreibbar, löschbar oder ansonsten veränderbar und enthält die Personaldaten und die Berechtigungen des Besitzers. Zum Auslesen dieser Daten ist beispielsweise an Stempeluhren eine Schnittstelle für eine Aufnahmeeinrichtung mit Leseeinheit vorzusehen, wobei nach Einschieben der Chipkarte bis zum Anschlag in die Aufnahmeeinrichtung die Personal-und Berechtigungsdaten ausgelesen und automatisch mit der Zeit versehen in einer elektronischen Datei abgespeichert werden.

Bei der vorliegenden Ausführung der Chipkarte ist daher besonders vorteilhaft, daß der mitzuführende Ausweis gleichzeitig als Telefonbuch dient.

Zusätzlich kann die Chipkarte noch einen dritten Speicherbereich enthalten, der ebenfalls veränderbar ist und für persönliche Notizen, wie Termine usw. gedacht ist. Diese Termine können an einer entsprechend ausgelegten Fernsprechstation über das Display beispielsweise durch Wählen einer bestimmten Codenummer ausgelesen werden.

## Ansprüche

1. Chipkarte als Datenträger, wobei die unterschiedlichen eingespeicherten Daten bestimmten Speicherbereichen zugeordnet sind und durch eine Leseeinrichtung ausgelesen werden, **dadurch gekennzeichnet,** daß ein erster Teil der Speicherbereiche aus Speicherplätzen besteht, in die mittels einer Einschreibvorrichtung Daten eingespeichert bzw. in denen mittels der Einschreibvorrichtung Daten überschrieben oder gelöscht werden können, daß ein zweiter Teil der Speicherbereiche aus nicht löschbaren und nicht überschreibbaren Speicherplätzen mit fest eingespeicherten Daten besteht, daß die Leseeinrichtung für den ersten Teil der Speicherbereiche einer Fernsprechstation mit zumindest einzeiligem Display angeordnet ist und daß die Leseeinrichtung für den zweiten Teil der Speicherbereiche einer Kontroll-und Registriereinrichtung zugeordnet ist.

2. Chipkarte nach Patentanspruch 1, **dadurch gekennzeichnet,** daß im ersten Teil der Speicherbereiche jedem Buchstaben des Alphabets ein gesonderter Speicherbereich zugeordnet ist, der zum Abspeichern einer oder mehrerer Telefonadressen mit dem entsprechenden Anfangsbuchstaben dient und der über die Tastatur der Fernsprechstation oder nach Betätigen einer Sondertaste an der Fernsprechstation durch Einsprechen eines Fernsprechteilnehmernamens ansteuerbar ist.

3. Chipkarte nach Patentanspruch 1, **dadurch gekennzeichnet,** daß im ersten Teil der Speicherbereiche ein Sonderbereich für beliebige Notizen (Termine) vorgesehen ist, der über die Tastatur einer Fernsprechstation ansteuerbar ist und der über die Leseeinrichtung und das Display der Fernsprechstation ausgelesen werden kann.

4. Chipkarte nach Patentanspruch 1, **dadurch gekennzeichnet,** daß der erste Teil der Speicherbereiche mit Hilfe einer alphanumerischen Tastatur beschrieben und geändert werden kann.